# EUROPEAN PATENT SPECIFICATION

(11) **EP 3 832 197 B1**
(45) Date of publication and mention of the grant of the patent: **22.03.2023**
(21) Application number: 18928541.4
(22) Date of filing: 02.08.2018
(51) Int. Cl.: F21V 3/02, F21V 1/14

(54) **LAMPSHADE STRUCTURE AND LAMP**
LAMPENSCHIRMSTRUKTUR UND LAMPE
STRUCTURE D'ABAT-JOUR ET LAMPE

(43) Date of publication of application: 09.06.2021
(73) Proprietor: Radiant Opto-Electronics Corporation, Kaohsiung City 80681 (TW)
(72) Inventor: CHANG, Cheng-Ang, Kaohsiung, Taiwan 80681 (TW); HUANG, Guo-Hao, Kaohsiung, Taiwan 80681 (TW)
(74) Representative: Grey, Ian Michael
(86) International application number: PCT/CN2018/098341
(87) International publication number: WO 2020/024223

(56) References cited:
- EP-A1- 2 677 231
- CN-A- 104 654 146
- CN-U- 205 316 245
- CN-U- 205 316 245
- CN-Y- 2 324 398
- CN-Y- 2 324 398
- CN-Y- 2 324 398
- CN-Y- 2 596 187
- CN-Y- 2 596 187
- KR-A- 20120 137 077

## Description

### TECHNICAL FIELD

The present application relates to a lampshade structure and its application, and in particular to a lampshade structure capable of changing light paths and producing special visual effects and a lamp using the lampshade structure.

### BACKGROUND

In response to market demand, lamps are becoming more and more diversely. In some lamps, a lampshade is provided outside the light-emitting source. Different combination of light-emitting sources and lampshades may provide consumers with multiple choices. However, in most of the current designs, different patterns or colors are printed on the outer surface of the lampshade, which may make it impossible to effectively use the light provided by the light source.

The document EP2677231A1 discloses an LED lamp device including a lamp holder, an LED module and a shield. The lamp holder includes a power module. The LED module is disposed on the lamp holder and is electrically connected to the power module. The shield is disposed on the lamp holder and covers the LED module. The shield has a top portion, a lateral portion, an accommodating space, and an inner rough surface and an outer surface opposite to each other. The LED module is located in the accommodating space, and the inner rough surface faces the accommodating space.

The document CN2324398Y discloses a photic lamp cover with a stereoscopic vision effect. The photic lamp cover includes a photic hollow main body. The main body includes openings provided at top end and a bottom end, respectively. A surface of the main body is provided with concave and convex patterns to form a wall with different thickness.

The document KR20120137077A discloses a LED lighting device including a heat sink, one or more LED elements, a light guide plate holder, and a light guide plate. The heat sink includes a loader formed on the center of the upper surface in a constant height. The LED elements are loaded on the loader. The light guide plate holder is installed on the heat sink to expose the loader. The light guide plate holder includes a plane portion covering the upper surface the heat sink. The light guide plate leads light generated in the LED element to the front, side and back directions.

### SUMMARY

Therefore, the present application is to provide a lampshade structure and its application to a lamp, in which visual effects with low glare and fantastic appearance can be achieved by means of the design of the lampshade structure.

In view of the above object, the present application provides a lamp. The lamp includes a light guide plate, a light source, a lampshade structure, and a fixing mount. The light guide plate has a light incident surface and a light exit surface. The light source is disposed adjacent to the light incident surface. The lampshade structure covers the light guide plate. The lampshade structure includes a body and a plurality of light guide structures. The body has an inner concave surface and an outer surface opposite to the inner concave surface. The light guide structures are disposed on the inner concave surface and/or the outer surface. Each of the light guide structures has a central thickness and a peripheral thickness, and the central thickness is less than the peripheral thickness. The light guide plate, the light source and the lampshade structure are disposed on the fixing mount. The fixing mount includes a first housing, a second housing, and a support shaft. The second housing is connected to the first housing and forms an accommodating space together with the first housing. The light source and a portion of the light guide plate close to the light incident surface are disposed within the accommodating space. The support shaft is disposed on the first housing, and the lampshade structure is disposed on the support shaft to cover the light guide plate and is located at a distance from the light guide plate.

According to an embodiment of the present application, the above-mentioned light guide structures are disposed on the outer surface, and each of the light guide structures is a recessed structure, and the recessed structure is recessed from the outer surface to the inner concave surface.

According to an embodiment of the present application, the above-mentioned light guide structures are disposed on the inner concave surface, and each of the light guide structures is a recessed structure, and the recessed structure is recessed from the inner concave surface to the outer surface.

According to an embodiment of the present application, the above-mentioned light guide plate has a ring-like structure, the ring-like structure has an inner ring surface, a first annular surface, and a second annular surface, wherein the first annular surface and the second annular surface are connected to opposite sides of the inner ring surface.

According to an embodiment of the present application, the above-mentioned inner ring surface is the light incident surface, and at least one of the first annular surface and the second annular surface is the light exit surface.

According to an embodiment of the present application, the above-mentioned inner ring surface is the light incident surface, and an optical coating is provided on at least one of the first annular surface and the second annular surface.

According to an embodiment of the present application, the above-mentioned inner ring surface is the light incident surface, the ring-like structure further includes an outer ring surface opposite to the inner ring surface, wherein an optical coating is provided on the outer ring surface.

According to an embodiment of the present application, the above-mentioned inner ring surface is the light incident surface, and the ring-like structure further includes an outer ring surface opposite to the inner ring surface, wherein the outer ring surface is an inclined surface.

According to an embodiment of the present application, the above-mentioned ring-like structure further includes an outer ring surface opposite to the inner ring surface, and a light mixing distance is formed between a periphery of the lampshade structure and the outer ring surface.

According to an embodiment of the present application, the above-mentioned support shaft has a first end and a second end which are opposite to each other, and the first end is connected to the first housing, and a flange is provided at the second end. The lampshade structure is sleeved on the second end and abuts against the flange. An end cover is provided at the second end and is configured to fix the lampshade structure.

According to an embodiment of the present application, the above-mentioned fixing mount further includes a base connected to and supporting the second housing.

According to an embodiment of the present application, each of the above-mentioned support shaft and end cover has a hollow structure, the hollow structure is configured to accommodate one end of a wire, and the other end of the wire is connected to the base of the fixing mount.

In view of foregoing, the lampshade structure of the present application includes a plurality of light guide structures, and each of the light guide structures may be formed with different thickness on the body of the lampshade structure. Therefore, due to differences in light absorptions and transmittances of the body at different thicknesses, a gradual light and shadow and different shades or colors of the light source can be produced when the light travels through the lampshade structure. Moreover, with different viewing angles of the viewer, the visual effects presented by the lampshade structure can also be different. In addition, when light travels through the light guide structure, the light guide structure can change the traveling direction of the light, thereby avoiding glare.

### DESCRIPTION OF THE DRAWINGS

In order to fully understand the embodiments and their advantages, the following description is now made with reference to the drawings, wherein:
Fig. 1 is a schematic view showing a lamp according to a first embodiment of the present application;
Fig. 2 is a partial cross-sectional view showing the lamp according to the first embodiment of the present application;
Fig. 3 is a front view showing a light guide plate according to an embodiment of the present application;
Fig. 4 is a schematic view illustrating light traveling in the light guide plate according to an embodiment of the present application;
Fig. 5A is a picture of a lamp not using a lampshade structure when the lamp is turned on;
Fig. 5B is a picture of a lamp using a lampshade structure of equal thickness when the lamp is turned on;
Fig. 5C is a picture of a lamp using a lampshade structure according to the first embodiment of the present application when the lamp is turned on;
Fig. 5D is a picture of a lamp using the lampshade structure according to the first embodiment of the present application when the lamp is turned off;
Fig. 6 is a schematic view showing a lamp according to a second embodiment of the present application;
Fig. 7 is a partial cross-sectional view showing a lamp according to the second embodiment of the present application;
Fig. 8A is a picture of a lamp not using a lampshade structure when the lamp is turned on;
Fig. 8B is a picture of a lamp using a lampshade structure of equal thickness when the lamp is turned on;
Fig. 8C is a picture of a lamp using a lampshade structure according to the second embodiment of the present application when the lamp is turned on;
Fig. 8D is a picture of a lamp using the lampshade structure according to the second embodiment of the present application when the lamp is turned off; and
Fig. 9 is a schematic view showing a lamp according to a third embodiment of the present application.

### DETAILED DESCRIPTION

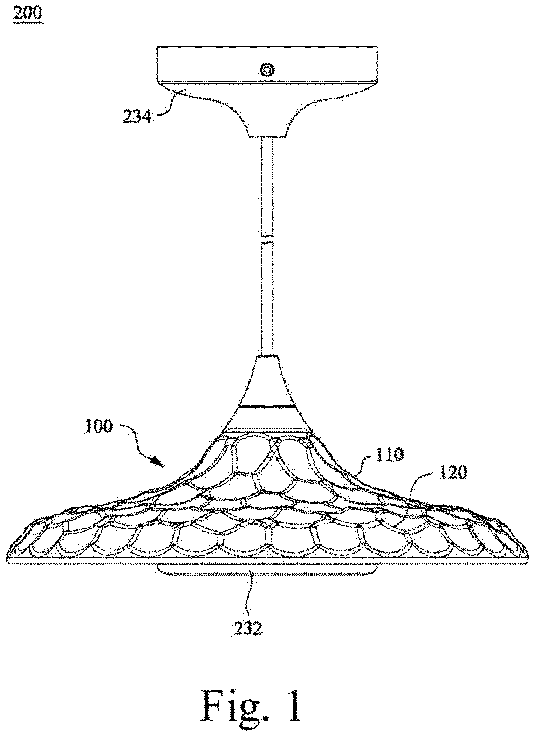

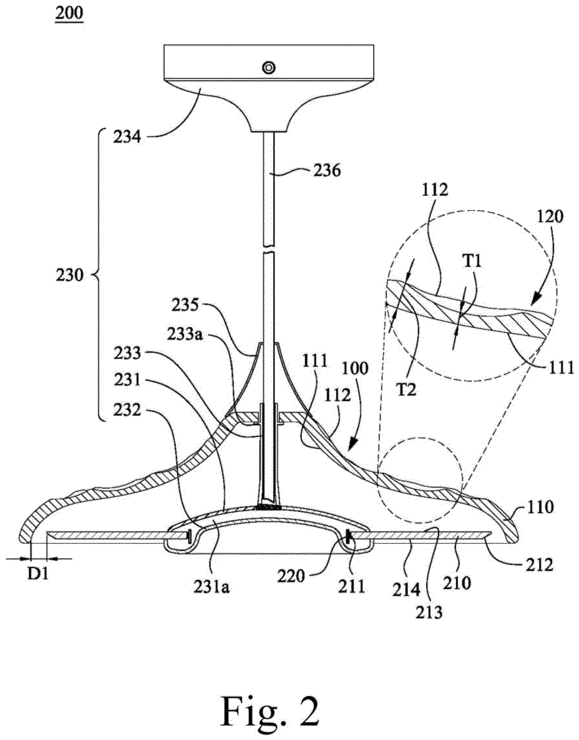

Please refer to Fig. 1 and Fig. 2 together. Fig. 1 and Fig. 2 are respectively a schematic view and a partial cross-sectional view showing a lamp according to a first embodiment of the present application. The lamp 200 according to this embodiment generally includes a light guide plate 210, a light source 220, a lampshade structure 100, and a fixing mount 230. The light guide plate 210, the light source 220 and the lampshade structure 100 are disposed on the fixing mount 230. The light source 220 mainly functions to provide light to the light guide plate 210. The lampshade structure 100 covers the light guide plate 210, and can refract and diffuse the light emitted from the light guide plate 210, to produce special optical effects.

Please refer to Fig. 2 again, the fixing mount 230 includes a first housing 231, a second housing 232, a support shaft 233 and a base 234. The first housing 231 is connected to the second housing 232, and the first housing 231 and the second housing 232 together form an accommodating space 231a. Each of the light source 220 and the light guide plate 210 has a ring-like structure, and the light source 220 and a portion of the light guide plate 210 close to a light incident surface 211 are disposed within the accommodating space 231a. The support shaft 233 has a first end and a second end which are opposite to each other. The first end is disposed on the first housing 231, and a flange 233a is provided at the second end. The lampshade structure 100 is sleeved on the second end of the support shaft 233 and abuts against the flange 233a to cover the light guide plate 210. In some examples, an end cover 235 is provided at the second end of the support shaft 233 and is configured to fix the lampshade structure 100. In this embodiment, each of the support shaft 233 and the end cover 235 has a hollow structure. One end of wire 236 may be passed through and fixed in the support shaft 233 and the end cover 235, and the other end of the wire 236 extends out of the support shaft 233 and the end cover 235 and is connected to the base 234. In this embodiment, the lamp 200 is in the form of a chandelier, and the base 234 may be connected to a ceiling or other default positions.

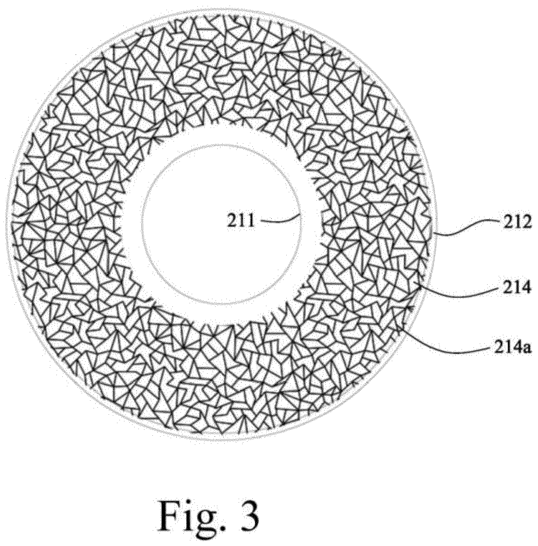

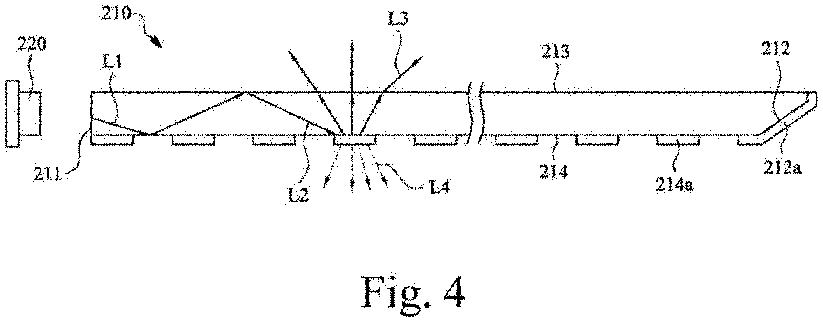

Please refer to Fig. 3 and Fig. 4 together. Fig. 3 is a front view showing a light guide plate according to an embodiment of the present application, and Fig. 4 is a schematic view illustrating light traveling in the light guide plate according to an embodiment of the present application. As shown in Fig. 3, the light guide plate 210 includes an inner ring surface 211, an outer ring surface 212, a first annular surface 213 and a second annular surface 214. The inner ring surface 211 of the light guide plate 210 is the light incident surface, and the light source 220 is disposed adjacent to the inner ring surface 211 of the light guide plate 210. In some examples, an optical coating 214a is disposed on the second annular surface 214. The optical coating 214a mainly functions to destroy the total reflection of the light, so that the light exits from the first annular surface 213. As shown in Fig. 4, the light (for example, light L1) provided by the light source 220 will be reflected when travelling to the position of the second annular surface 214 where the optical coating 214a is not disposed. Most of the light (for example, light L2) directed to the optical coating 214a will be reflected by the optical coating 214 and exit from the first annular surface 213 (for example, light L3), and a small amount of the remaining light (for example, light L4) will be diffused out through the optical coating 214. Therefore, as viewed from the second annular surface 214, the portion where the optical coating 214a is disposed appears to be brighter. Accordingly, the optical coating 214a may be patterned on the surface of the light guide plate 210, such that the light guide plate 210 can have different appearance designs, and can further produce different optical effects. In other examples, the optical coating 214a may also be disposed on the first annular surface 213 according to different requirements.

In other embodiments, the outer ring surface 212 of the light guide plate 210 may be designed as an inclined surface. In this embodiment, an acute angle is formed between the outer ring surface 212 and the first annular surface 213. Thereby, the light may exit toward the first annular surface 213 opposite to the outer ring surface 212 after travelling to the outer ring surface 212. In other embodiments, alternatively, an acute angle may be formed between the outer ring surface 212 and the second annular surface 214, to change the reflection direction of light. Alternatively, the optical coating 212a may be disposed on the outer ring surface 212, to change the light emitting effect of the light guide plate 210. As shown in Fig. 2, in some embodiments, when the lampshade structure 100 caps the light guide plate 210, a light mixing distance D1 may be formed between the outer ring surface 212 of the light guide plate 210 and the periphery of the lampshade structure 100. Therefore, the light diffused from the outer ring surface 212 can produce a halo visual effect with the aid of the lampshade structure 100.

Please refer to Fig. 2 again, the lampshade structure 100 generally includes a body 110 and a plurality of light guide structures 120. The body 110 has an inner concave surface 111 and an outer surface 112 opposite to the inner concave surface 111. In this embodiment, the light guide structures 120 are disposed on the outer surface 112, and the inner concave surface 111 is a smooth surface. Each of the light guide structures 120 is recessed from the outer surface 112 toward the inner concave surface 111. Moreover, each of the light guide structures 120 has a central thickness T1 and a peripheral thickness T2, and the central thickness T1 is less than the peripheral thickness T2. Therefore, due to differences in light absorptions and transmittances of the body 110 at different thicknesses, different optical effects can be produced when the light travels through the lampshade structure 100.

Specifically, the body 110 of the lampshade structure 100 has a smaller thickness at a position near the center of the light guide structure 120, and has a larger thickness at a position near the periphery of the light guide structure 120. Moreover, the portion of the body 110 with the smaller thickness has higher light transmittance and lower energy absorption, and the portion of the body 110 with the larger thickness has lower light transmittance and higher energy absorption. Therefore, when light from different directions travels through different positions of the lampshade structure 100, the traveling direction and intensity of the light will be changed, thereby a special optical effect can be formed.

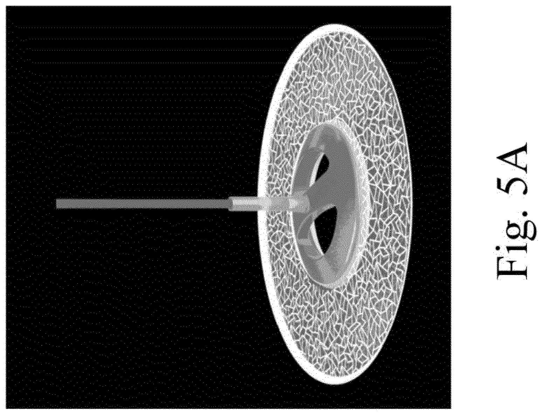

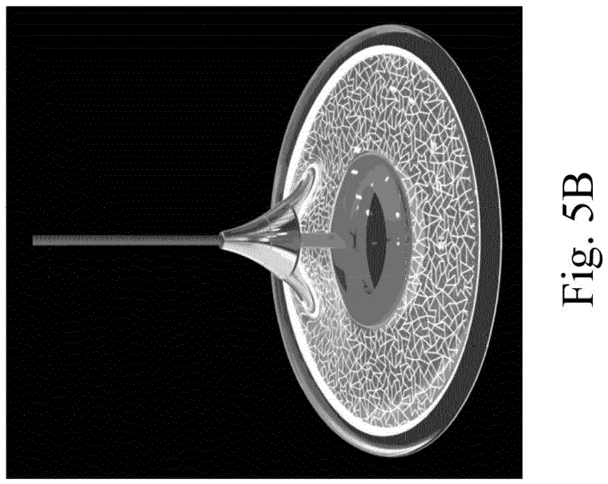

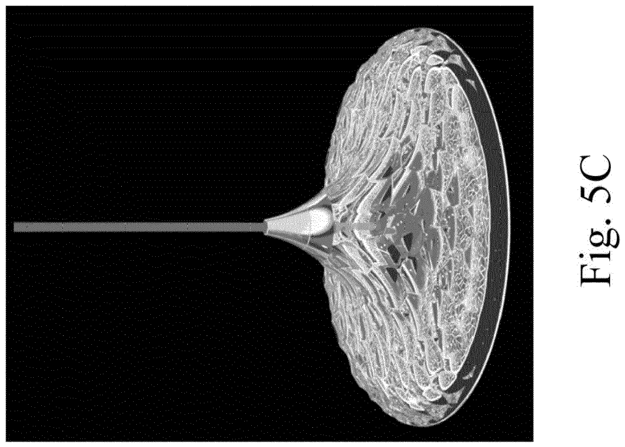

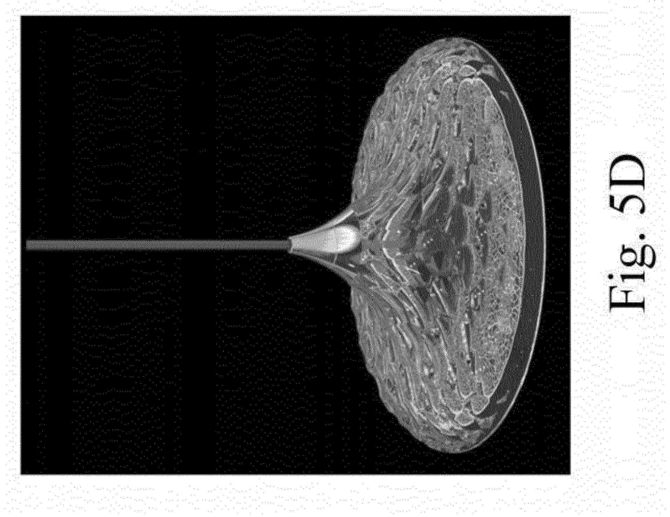

Please refer to Figs. 5A to 5D together. Fig. 5A is a picture of a lamp not using a lampshade structure when the lamp is turned on, Fig. 5B is a picture of a lamp using a lampshade structure of equal thickness when the lamp is turned on, Fig. 5C is a picture of a lamp using a lampshade structure according to the first embodiment of the present application when the lamp is turned on, and Fig. 5D is a picture of a lamp using a lampshade structure according to the first embodiment of the present application when the lamp is turned off. As shown in Fig. 5A, when the lampshade structure is not used, only the light-emitting state of the light guide plate itself and the pattern of the optical coating disposed on the light guide plate can be seen. As shown in Fig. 5B, after the lampshade structure of equal thickness is used, although a slight change in shadow can be produced, the overall light and shadow appearance and texture are relatively monotonous, and glare may be still produced after the light travels through the lampshade structure of equal thickness

As shown in Fig. 5C, after the lampshade structure according to the first embodiment of the present application is used, the lampshade structure of unequal thickness can refract, absorb or diffuse some of the light. In addition to avoidance of glare, a visual effect of gradation of light can also be produced. Furthermore, depending on different thickness of the lampshade structure, the resulting visual color can be different. For example, in the picture shown in Fig. 5C, after the light generated by the yellow light source travels through the light guide plate and exits from the lampshade structure, change in light and shadow of dark yellow and light yellow can be formed on the surface of the lampshade. As shown in Fig. 5D, when the lamp is turned off, the lampshade of unequal thickness may also refract a small amount of external natural light, highlighting the three-dimensional texture of the lampshade structure itself. In some examples, the lampshade structure may be made of glass, improving the transparency and texture of the lampshade structure.

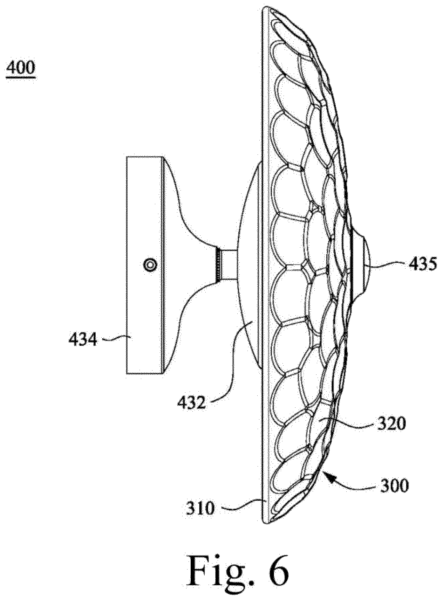

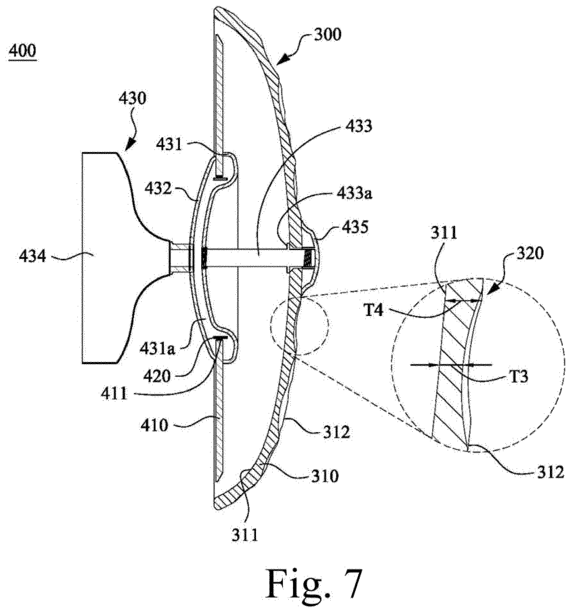

It should be appreciated that the lamp of the present application may alternatively be in the form of a wall lamp. Please refer to Fig. 6 and Fig. 7 together. Fig. 6 and Fig. 7 are respectively a schematic view and a partial cross-sectional view showing a lamp according to a second embodiment of the present application. The lamp 400 according to this embodiment generally includes a light guide plate 410, a light source 420, a lampshade structure 300, and a fixing mount 430. The light guide plate 410, the light source 420 and the lampshade structure 300 are disposed on the fixing mount 430.

As shown in Fig. 7, the fixing mount 430 includes a first housing 431, a second housing 432, a support shaft 433 and a seat body 434. The first housing 431 is connected to the second housing 432, and the first housing 431 and the second housing 432 together form an accommodating space 431a. Each of the light source 420 and the light guide plate 410 has a ring-like structure, and the light source 420 and a portion of the light guide plate 410 close to the light incident surface 411 are disposed within the accommodating space 431a. The support shaft 433 has a first end and a second end which are opposite to each other. The first end is disposed on the first housing 431, and a flange 433a is provided at the second end. The lampshade structure 300 is sleeved on the second end of the support shaft 433 and abuts against the flange 433a to cover the light guide plate 410. In some examples, an end cover 435 is provided at the second end of the support shaft 433 and is configured to fix the lampshade structure 300. In this embodiment, the lamp 400 is in the form of the wall lamp, the second housing 432 is directly fixed onto the base 434, and the base 434 may be fixed to a wall or other default positions.

In this embodiment, the light guide plate 410 has same design as that of the light guide plate 210 shown in Figs. 2 to 4, so the description thereof will not be repeated here.

Please refer to Fig. 7 again. In this embodiment, the lampshade structure 300 generally includes a body 310 and a plurality of light guide structures 320. The body 310 has an inner concave surface 311 and an outer surface 312 opposite to the inner concave surface 311. In this embodiment, the light guide structures 320 are disposed on the outer surface 312, and the inner concave surface 311 is a smooth surface. Each of the light guide structures 320 is recessed from the outer surface 312 toward the inner concave surface 311. Moreover, each of the light guide structures 320 has a central thickness T3 and a peripheral thickness T4, and the central thickness T3 is less than the peripheral thickness T4. Therefore, due to differences in light absorptions and transmittances of the body 310 at different thicknesses, different optical effects can be produced when the light travels through the lampshade structure 300.

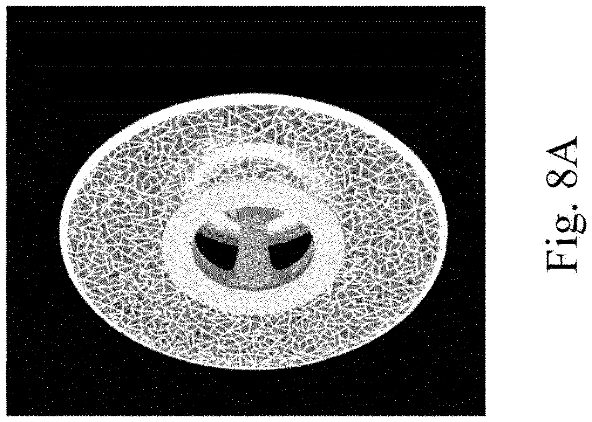

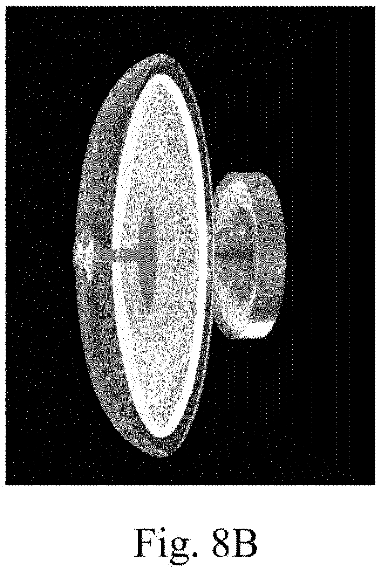

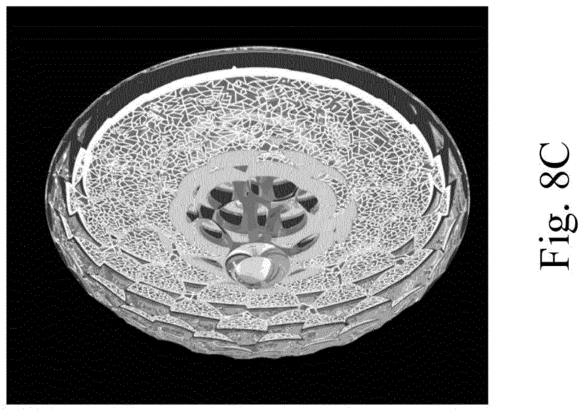

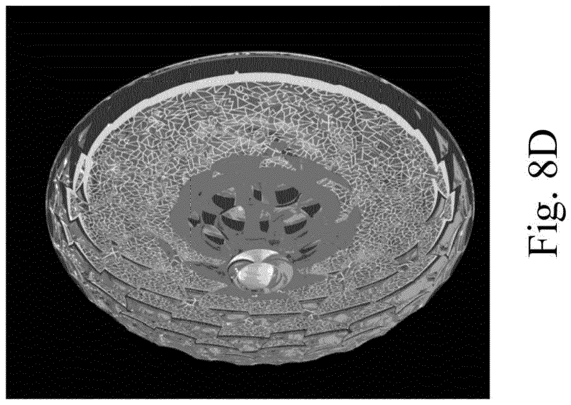

Please refer to Figs. 8A to 8D together. Fig. 8A is a picture of a lamp not using a lampshade structure when the lamp is turned on, Fig. 8B is a picture of a lamp using a lampshade structure of equal thickness when the lamp is turned on, Fig. 8C is a picture of a lamp using a lampshade structure according to the second embodiment of the present application when the lamp is turned on, and Fig. 8D is a picture of a lamp using a lampshade structure according to the second embodiment of the present application when the lamp is turned off. As shown in Fig. 8A, when the lampshade structure is not used, only the light-emitting state of the light guide plate itself and the pattern of the optical coating disposed on the light guide plate can be seen. As shown in Fig. 8B, after the lampshade structure of equal thickness is used, although a slight change in light and shadow can be produced, the overall light and shadow appearance and texture are relatively monotonous, and glare may be still produced after the light travels through the lampshade structure of equal thickness

As shown in Fig. 8C, after the lampshade structure according to the second embodiment of the present application is used, the lampshade structure of unequal thickness can refract, absorb or diffuse some of the light. In addition to avoidance of glare, a visual effect of gradation of light can also be produced. Furthermore, depending on different thickness of the lampshade structure, the resulting visual color can be different. For example, in the picture shown in Fig. 8C, after the light generated by the yellow light source travels through the light guide plate and exits from the lampshade structure, change in light and shadow of dark yellow and light yellow can be formed on the surface of the lampshade. As shown in Fig. 8D, when the lamp is turned off, the lampshade of unequal thickness may also refract a small amount of external natural light, highlighting the three-dimensional texture of the lampshade structure itself. In some examples, the lampshade structure may be made of glass, improving the transparency and texture of the lampshade structure.

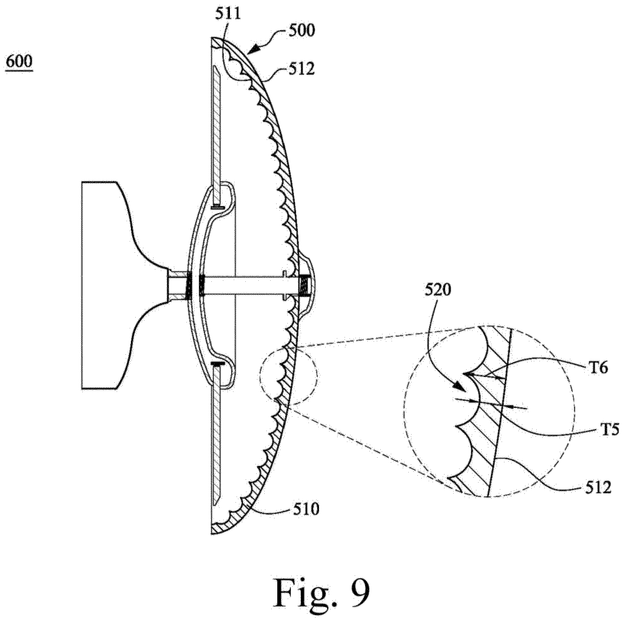

Please also refer to Fig. 9. Fig. 9 is a schematic view showing a lamp according to a third embodiment of the present application. The lamp 600 in this embodiment has the same substantially structure as that of the lamp 400 shown in Fig. 7. The difference merely lies in that the lampshade structure 500 of the lamp 600 has a different design. As shown in Fig. 9, the lampshade structure 500 generally includes a body 510 and a plurality of light guide structures 520. The body 510 has an inner concave surface 511 and an outer surface 512 opposite to the inner concave surface 511. In this embodiment, the light guide structure 520 is disposed on the inner concave surface 511, and the outer surface 512 is a smooth surface. In this embodiment, each of the light guide structures 520 is a recessed structure which is recessed from the inner concave surface 511 toward the outer surface 512. Moreover, each of the light guide structures 520 has a central thickness T5 and a peripheral thickness T6, and the central thickness T5 is less than the peripheral thickness T6. Therefore, due to differences in light absorptions and transmittances of the body 510 at different thicknesses, different optical effects can be produced when the light travels through the lampshade structure 500.

As can be seen from the foregoing embodiments of the present application, the lampshade structure of the present application includes a plurality of light guide structures, and each of the light guide structures may be formed with different thickness on the body of the lampshade structure. Therefore, due to differences in light absorptions and transmittances of the body at different thicknesses, a gradual light and shadow and different shades or colors of the light source can be produced when the light travels through the lampshade structure. Moreover, with different viewing angles of the viewer, the visual effects presented by the lampshade structure can also be different. In addition, when light travels through the light guide structure, the light guide structure can change the traveling direction of the light, thereby avoiding glare.

### DESCRIPTION OF REFERENCE NUMERALS

100: lampshade structure
110: body
111: inner concave surface
112: outer surface
120: light guide structure
200: lamp
210: light guide plate
211: inner ring surface
212: outer ring surface
212a: optical coating
213: first annular surface
214: second annular surface
214a: optical coating
220: light source
230: fixing mount
231: first housing
231a: accommodating space
232: second housing
233: support shaft
233a: flange
234: base
235: end cover
236: wire
300: lampshade structure
310: body
311: inner concave surface
312: outer surface
320: light guide structure
400: lamp
410: light guide plate
420: light source
430: fixing mount
431: first housing
431a: accommodating space
432: second housing
433: support shaft
433a: flange
434: base
435: end cover
500: lampshade structure
510: body
511: inner concave surface
512: outer surface
520: light guide structure
600: lamp
D1: light mixing distance
T1: central thickness
T2: peripheral thickness
T3: central thickness
T4: peripheral thickness
T5: central thickness
T6: peripheral thickness

## Claims

1. A lamp (200, 400, 600), comprising:
a light guide plate (210, 410) having a light incident surface and a light exit surface;
a light source (220, 420) disposed adjacent to the light incident surface;
a lampshade structure (100, 300, 500) covering the light guide plate (210, 410), wherein the lampshade structure (100, 300, 500) comprises:
a body (110, 310, 510) having an inner concave surface (111, 311, 511) and an outer surface (112, 312, 512) opposite to the inner concave surface (111, 311, 511); and
a plurality of light guide structures (120, 320, 520) disposed on the inner concave surface (111, 311, 511) or the outer surface (112, 312, 512), wherein each of the light guide structures (120, 320, 520) has a central thickness (T1, T3, T5) and a peripheral thickness (T2, T4, T6), and the central thickness (T1, T3, T5) is less than the peripheral thickness (T2, T4, T6); and
a fixing mount (230, 430), wherein the light guide plate (210, 410), the light source (220, 420) and the lampshade structure (100, 300, 500) are disposed on the fixing mount (230, 430), wherein the fixing mount (230, 430) comprises:
a first housing (231, 431);
a second housing (232, 432) connected to the first housing (231, 431), wherein the second housing (232, 432) forms an accommodating space (231a, 431a) together with the first housing (231, 431), and the light source (220, 420) and a portion of the light guide plate (210, 410) close to the light incident surface are disposed within the accommodating space (231a, 431a); and
a support shaft (233, 433) disposed on the first housing (231, 431), wherein the lampshade structure (100, 300, 500) is disposed on the support shaft (233, 433) to cover the light guide plate (210, 410) and is located at a distance from the light guide plate (210, 410).

2. The lamp (200, 400, 600) according to claim 1, wherein the light guide structures (120, 320) are disposed on the outer surface (112, 312), and each of the light guide structures (120, 320) is a recessed structure, and the recessed structure is recessed from the outer surface (112, 312) to the inner concave surface (111, 311).

3. The lamp (200, 400, 600) according to claim 1, wherein the light guide structures (520) are disposed on the inner concave surface (511), and each of the light guide structures (520) is a recessed structure, and the recessed structure is recessed from the inner concave surface (511) to the outer surface (512).

4. The lamp (200, 400, 600) according to claim 1, wherein the light guide plate (210, 410) has a ring-like structure, the ring-like structure has an inner ring surface (211), a first annular surface (213), and a second annular surface (214), and wherein the first annular surface (213) and the second annular surface (214) are connected to opposite sides of the inner ring surface (211).

5. The lamp (200, 400, 600) according to claim 4, wherein the inner ring surface (211) is the light incident surface, and at least one of the first annular surface (213) and the second annular surface (214) is the light exit surface.

6. The lamp (200, 400, 600) according to claim 4, wherein the inner ring surface (211) is the light incident surface, and an optical coating (214a) is provided on at least one of the first annular surface (213) and the second annular surface (214).

7. The lamp (200, 400, 600) according to claim 4, wherein the inner ring surface (211) is the light incident surface, and the ring-like structure further comprises an outer ring surface (212) opposite to the inner ring surface (211), and wherein an optical coating (212a) is provided on the outer ring surface (212).

8. The lamp (200, 400, 600) according to claim 4, wherein the inner ring surface (211) is the light incident surface, and the ring-like structure further comprises an outer ring surface (212) opposite to the inner ring surface (211), wherein the outer ring surface (212) is an inclined surface.

9. The lamp (200, 400, 600) according to claim 4, wherein the ring-like structure further comprises an outer ring surface (212) opposite to the inner ring surface (211), and a light mixing distance (D1) is formed between a periphery of the lampshade structure (100, 300, 500) and the outer ring surface (212).

10. The lamp (200, 400, 600) according to claim 1, wherein the support shaft (233, 433) has a first end and a second end which are opposite to each other, the first end is connected to the first housing (231, 431), a flange (233a, 433a) is provided at the second end, the lampshade structure (100, 300, 500) is sleeved on the second end and abuts against the flange (233a, 433a), and wherein an end cover (235, 435) is provided at the second end and is configured to fix the lampshade structure (100, 300, 500).

11. The lamp (200, 400, 600) according to claim 10, wherein each of the support shaft (233, 433) and the end cover (235, 435) has a hollow structure, wherein the hollow structure is configured to accommodate one end of a wire (236), and the other end of the wire (236) is connected to the base (234, 434) of the fixing mount (230, 430).

12. The lamp (200, 400, 600) according to claim 10, wherein the fixing mount (230, 430) further comprises a base (234, 434) connected to and supporting the second housing (232, 432).

## Patentansprüche

1. Lampe (200, 400, 600), umfassend:
eine Lichtleitplatte (210, 410) mit einer Lichteinfallsfläche und einer Lichtaustrittsfläche;
eine Lichtquelle (220, 420), die neben der Lichteinfallsfläche angeordnet ist;
eine Lampenschirmstruktur (100, 300, 500), die die Lichtleiterplatte (210, 410) bedeckt, wobei die Lampenschirmstruktur (100, 300, 500) Folgendes umfasst:
einen Körper (110, 310, 510) mit einer inneren konkaven Oberfläche (111, 311, 511) und einer äußeren Oberfläche (112, 312, 512) gegenüber der inneren konkaven Oberfläche (111, 311, 511); und
eine Vielzahl von Lichtleitstrukturen (120, 320, 520), die auf der inneren konkaven Oberfläche (111, 311, 511) oder der äußeren Oberfläche (112, 312, 512) angeordnet sind, wobei jede der Lichtleitstrukturen (120, 320, 520) eine zentrale Dicke (T1, T3, T5) und eine periphere Dicke (T2, T4, T6) aufweist, und die zentrale Dicke (T1, T3, T5) geringer als die periphere Dicke (T2, T4, T6) ist; und
eine Befestigungshalterung (230, 430), wobei die Lichtleitplatte (210, 410), die Lichtquelle (220, 420) und die Lampenschirmstruktur (100, 300, 500) an der Befestigungshalterung (230, 430) angeordnet sind, wobei die Befestigungshalterung (230, 430) Folgendes umfasst:
ein erstes Gehäuse (231, 431);
ein zweites Gehäuse (232, 432), das mit dem ersten Gehäuse (231, 431) verbunden ist, wobei das zweite Gehäuse (232, 432) zusammen mit dem ersten Gehäuse (231, 431) einen Aufnahmeraum (231a, 431a) bildet, und die Lichtquelle (220, 420) und ein nahe der Lichteinfallsfläche liegender Abschnitt der Lichtleitplatte (210, 410) innerhalb des Aufnahmeraums (231a, 431a) angeordnet sind; und
einen auf dem ersten Gehäuse (231, 431) angeordneten Stützschaft (233, 433), wobei die Lampenschirmstruktur (100, 300, 500) auf dem Stützschaft (233, 433) zum Abdecken der Lichtleitplatte (210, 410) angeordnet ist und sich in einem Abstand von der Lichtleitplatte (210, 410) befindet.

2. Lampe (200, 400, 600) nach Anspruch 1, wobei die Lichtleitstrukturen (120, 320) auf der äußeren Oberfläche (112, 312) angeordnet sind und jede der Lichtleitstrukturen (120, 320) eine vertiefte Struktur ist, und die vertiefte Struktur von der äußeren Oberfläche (112, 312) zu der inneren konkaven Oberfläche (111, 311) vertieft ist.

3. Lampe (200, 400, 600) nach Anspruch 1, wobei die Lichtleitstrukturen (520) auf der inneren konkaven Oberfläche (511) angeordnet sind und jede der Lichtleitstrukturen (520) eine vertiefte Struktur ist, und die vertiefte Struktur von der inneren konkaven Oberfläche (511) zur äußeren Oberfläche (512) vertieft ist.

4. Lampe (200, 400, 600) nach Anspruch 1, wobei die Lichtleitplatte (210, 410) eine ringartige Struktur aufweist, die ringartige Struktur eine innere Ringfläche (211), eine erste ringförmige Oberfläche (213) und eine zweite ringförmige Oberfläche (214) aufweist, und wobei die erste ringförmige Oberfläche (213) und die zweite ringförmige Oberfläche (214) mit gegenüberliegenden Seiten der inneren Ringfläche (211) verbunden sind.

5. Lampe (200, 400, 600) nach Anspruch 4, wobei die innere Ringfläche (211) die Lichteinfallsfläche ist und mindestens eine der ersten ringförmigen Fläche (213) und der zweiten ringförmigen Fläche (214) die Lichtaustrittsfläche ist.

6. Lampe (200, 400, 600) nach Anspruch 4, wobei die innere Ringfläche (211) die Lichteinfallsfläche ist und eine optische Beschichtung (214a) auf mindestens einer der ersten ringförmigen Flächen (213) und der zweiten Ringfläche (214) vorgesehen ist.

7. Lampe (200, 400, 600) nach Anspruch 4, wobei die innere Ringfläche (211) die Lichteinfallsfläche ist und die ringartige Struktur femer eine äußere Ringfläche (212) gegenüber der inneren Ringfläche (211) umfasst, und wobei eine optische Beschichtung (212a) auf der äußeren Ringfläche (212) vorgesehen ist.

8. Lampe (200, 400, 600) nach Anspruch 4, wobei die innere Ringfläche (211) die Lichteinfallsfläche ist und die ringförmige Struktur femer eine äußere Ringfläche (212) gegenüber der inneren Ringfläche (211) umfasst, wobei die äußere Ringfläche (212) eine geneigte Oberfläche ist.

9. Lampe (200, 400, 600) nach Anspruch 4, wobei die ringartige Struktur femer eine äußere Ringfläche (212) gegenüber der inneren Ringfläche (211) umfasst, und ein Lichtmischungsabstand (D1) zwischen einem Umfang der Lampenschirmstruktur (100, 300, 500) und der äußeren Ringfläche (212) gebildet ist.

10. Lampe (200, 400, 600) nach Anspruch 1, wobei der Stützschaft (233, 433) ein erstes Ende und ein zweites Ende aufweist, die einander gegenüberliegen, das erste Ende mit dem ersten Gehäuse (231, 431) verbunden ist, ein Flansch (233a, 433a) am zweiten Ende vorgesehen ist, die Lampenschirmstruktur (100, 300, 500 ) am zweiten Ende ummantelt ist und an dem Flansch (233a, 433a) anliegt, und wobei eine Endabdeckung (235, 435) am zweiten Ende vorgesehen ist und dazu konfiguriert ist, die Lampenschirmstruktur (100, 300, 500) zu fixieren.

11. Lampe (200, 400, 600) nach Anspruch 10, wobei sowohl der Stützschaft (233, 433) als auch die Endabdeckung (235, 435) eine hohle Struktur aufweist, wobei die hohle Struktur dazu konfiguriert ist, ein Ende eines Drahtes (236) aufzunehmen, und das andere Ende des Drahts (236) mit der Basis (234, 434) der Befestigungshalterung (230, 430) verbunden ist.

12. Lampe (200, 400, 600) nach Anspruch 10, wobei die Befestigungshalterung (230, 430) femer eine Basis (234, 434) umfasst, die mit dem zweiten Gehäuse (232, 432) verbunden ist und dieses trägt.

## Revendications

1. Lampe (200, 400, 600), comprenant :
une plaque de guidage de la lumière (210, 410) ayant une surface d'incidence de la lumière et une surface d'émergence de la lumière ;
une source lumineuse (220, 420) disposée de manière adjacente à la surface d'incidence de la lumière ;
une structure d'abat-jour (100, 300, 500) recouvrant la plaque de guidage de la lumière (210, 410), dans laquelle la structure d'abat-jour (100, 300, 500) comprend :
un corps (110, 310, 510) ayant une surface concave interne (111, 311, 511) et une surface externe (112, 312, 512) à l'opposé de la surface concave interne (111, 311, 511) ; et
une pluralité de structures de guidage de la lumière (120, 320, 520) disposées sur la surface concave interne (111, 311, 511) ou sur la surface externe (112, 312, 512), dans laquelle chacune des structures de guidage de la lumière (120, 320, 520) présente une épaisseur centrale (T1, T3, T5) et une épaisseur périphérique (T2, T4, T6), l'épaisseur centrale (T1, T3, T5) étant inférieure à l'épaisseur périphérique (T2, T4, T6) ;
un support de fixation (230, 430), dans lequel la plaque de guidage de la lumière (210, 410), la source lumineuse (220, 420) et la structure d'abat-jour (100, 300, 500) sont disposées sur le support de fixation (230, 430), et le support de fixation (230, 430) comprend :
un premier logement (231, 431) ;
un second logement (232, 432) connecté au premier logement (231, 431), dans lequel le second logement (232, 432) délimite un espace de logement (231a, 431a) avec le premier logement (231, 431), et la source lumineuse (220, 420) et une partie de la plaque de guidage de la lumière (210, 410) proche de la surface d'incidence de la lumière sont disposées dans l'espace de logement (231a, 431a) ; et
un arbre de support (233, 433) disposé sur le premier logement (231, 431), dans lequel la structure d'abat-jour (100, 300, 500) est disposée sur l'arbre de support (233, 433) pour recouvrir la plaque de guidage de la lumière (210, 410) et est situé à une certaine distance de la plaque de guidage de la lumière (210, 410).

2. Lampe (200, 400, 600) selon la revendication 1, dans laquelle les structures de guidage de la lumière (120, 320) sont disposées sur la surface externe (112, 312), et chacune des structures de guidage de la lumière (120, 320) a une structure enfoncée, et la structure enfoncée s'enfonce de la surface externe (112, 312) à la surface concave interne (111, 311).

3. Lampe (200, 400, 600) selon la revendication 1, dans laquelle les structures de guidage de la lumière (520) sont disposées sur la surface concave interne (511), et chacune des structures de guidage de la lumière (520) a une structure enfoncée, et la structure enfoncée s'enfonce de la surface concave interne (511) à la surface externe (512).

4. Lampe (200, 400, 600) selon la revendication 1, dans laquelle la plaque de guidage de la lumière (210, 410) a une structure en forme d'anneau, la structure en forme d'anneau a une surface annulaire interne (211), une première surface annulaire (213), et une seconde surface annulaire (214), et dans laquelle la première surface annulaire (213) et la seconde surface annulaire (214) sont connectées aux côtés opposés de la surface annulaire interne (211).

5. Lampe (200, 400, 600) selon la revendication 4, dans laquelle la surface annulaire interne (211) est la surface d'incidence de la lumière, et au moins une des premières surfaces annulaires (213) et de la seconde surface annulaire (214) est la surface d'émergence de la lumière.

6. Lampe (200, 400, 600) selon la revendication 4, dans laquelle la surface annulaire interne (211) est la surface d'incidence de la lumière, et un revêtement optique (214a) est prévu sur au moins une des premières surfaces annulaires (213) et de la seconde surface annulaire (214).

7. Lampe (200, 400, 600) selon la revendication 4, dans laquelle la surface annulaire interne (211) est la surface d'incidence de la lumière, et la structure en forme d'anneau comprend en outre une surface annulaire externe (212) à l'opposé de la surface annulaire interne (211), et dans laquelle un revêtement optique (212a) est prévu sur la surface annulaire externe (212).

8. Lampe (200, 400, 600) selon la revendication 4, dans laquelle la surface annulaire interne (211) est la surface d'incidence de la lumière, et la structure en forme d'anneau comprend en outre une surface annulaire externe (212) à l'opposé de la surface annulaire interne (211), et dans laquelle la surface annulaire externe (212) est une surface inclinée.

9. Lampe (200, 400, 600) selon la revendication 4, dans laquelle la structure en forme d'anneau comprend en outre une surface annulaire externe (212) à l'opposé de la surface annulaire interne (211), et une distance de mélange de la lumière (D1) est formée entre une périphérie de la structure d'abat-jour (100, 300, 500) et la surface annulaire externe (212).

10. Lampe (200, 400, 600) selon la revendication 1, dans laquelle l'arbre de support (233, 433) a une première extrémité et une seconde extrémité qui sont à l'opposé l'une de l'autre, la première extrémité est connectée au premier logement (231, 431), une bride (233a, 433a) est prévue à la seconde extrémité, la structure d'abat-jour (100, 300, 500) est gainée à la seconde extrémité et s'appuie contre la bride (233a, 433a), et dans laquelle un couvercle d'extrémité (235, 435) est prévu à la seconde extrémité et est configuré pour fixer la structure d'abat-jour (100, 300, 500).

11. Lampe (200, 400, 600) selon la revendication 10, dans laquelle chacun des arbres de support (233, 433) et le couvercle d'extrémité (235, 435) ont une structure creuse, dans laquelle la structure creuse est configurée pour loger une extrémité d'un fil (236), et l'autre extrémité du fil (236) est connectée à une base (234, 434) du support de fixation (230, 430).

12. Lampe (200, 400, 600) selon la revendication 10, dans laquelle le support de fixation (230, 430) comprend en outre une base (234, 434) connectée à et supportant le second logement (232, 432).
